# EUROPEAN PATENT SPECIFICATION

(11) **EP 0 307 720 B1**
(45) Date of publication and mention of the grant of the patent: **10.03.1993**
(21) Application number: 88114200.4
(22) Date of filing: 31.08.1988
(51) Int. Cl.: D06N 7/00, D06N 3/00, A01N 25/34

(54) **Geotextile having soil treatment compound and method**
Ein Bodenbehandlungsmittel enthaltendes Geotextil und Verfahren
Géotextile ayant un agent pour le traitement du sol

(30) Priority: 15.09.1987 US 97543
(43) Date of publication of application: 22.03.1989
(73) Proprietor: REEMAY, INC., Old Hickory Tennessee 37138 (US)
(72) Inventor: Zimmerman, Leon H, Nashville Tennessee 37205 (US)
(74) Representative: Bunke, Holger, Dr.rer.nat. Dipl.-Chem.

(56) References cited:
- FR-A- 2 476 704
- GB-A- 2 098 541
- GB-A- 2 115 697

## Description

This invention relates to a method of preparing a porous web or porous sheet material and to said porous web or sheet material having a soil treatment agent applied thereto for the purpose of releasing the agent into the soil on a gradual or long-term basis.

Various methods have been proposed for treating soil for controlling or regulating the growth of plant or animal life. If the chemical agent is applied directly to the soil, however, the effects are temporary, since the chemical tends to be washed away or degraded. A particular serious problem is the long term control of plant root growth in certain locations such as beneath remote power transmission lines or into areas containing toxic materials. Many herbicides are useful for these purposes, including those described in U.S. Patents No. 3,111,403, No. 3,257,190 and 4,101,582. A particularly useful herbicide is N, N-di-n-propyl-4-trifluoromethyl-2-6-dinitroaniline, which is known by the generic name trifluralin and sold under the trademark "TREFLAN".

In order to accomplish long term control of plant growth and root development, it is known to provide slow release systems for herbicidal and other soil treatment compounds. The herbicide or other compound may be incorporated or dispersed in a solid matrix of a water insoluble polymer such that the active compound is released very slowly, i.e., for periods for up to one hundred years. These slow release materials are typically prepared in the form of solid pellets which are deposited in the soil in a uniformly spaced manner. Manually positioning the individual pellets in the required pattern in the soil is time consuming and cost prohibitive. In addition, if there is nothing to hold the pellets in place, however, they tend to become displaced over a period of time, causing loss of control. Passage of water or soil disruption may cause movement of the pellets to adjacent areas, causing damage to useful plants or crops.

From GB- 2 115 697 soil treatment device is known, which consists of a flexible strip or tape made up of two layers bonded together. The two layers making up the strip are coated or impregnated with pesticides or soil treatment agents which may be mixed with a suitable bate. The resulting tape or strip acts as a pesticidal or soil treatment device and is laid along the surface of soil containing growing plants. A similar device is known from GB- 2 098 541. Therein the flexible strip is a laminated product comprising two flexible sheets fused together having entrapped between them a particular material containing pesticides, soil treating agents or other soil treating chemicals.

A geotextile is a porous sheet material which may be applied on or beneath the soil surface for a variety of purposes, for example, to block passage of sunlight or to control erosion, while allowing passage of water. These textiles are usually made from non-degradable materials such as polymers. Particular examples included non-woven spunbonded textiles made from filaments or fibers of polypropylene, such as products sold under the trademark "Typar". It would be desirable to incorporate slow release soil treating agents into geotextiles for the purpose of selectively treating soil in specific locations.

In order to be effective, the slow release material must have a certain minimum size or cross section to provide a minimum length herbicide migration path. A second requirement is the precise relative positioning of the deposits in the soil to obtain a durable and impenetrable root barrier plane. Thus, for example, direct incorporation of a herbicide into the geotextile during manufacture or by applying a uniform coating onto a porous substrate is either not feasible or would not provide the required slow release feature.

It is an object of this invention to provide a method of adhering soil treating chemicals to a porous web or geotextile without the use of special adhesives and said porous web with the soil treating chemicals which will be gradually released over a period of time.

The foregoing objectiv is accomplished by applying a method of preparing a porous web having a soil treatment agent applied thereto comprising the steps given in claim 1 and by providing a geotextile having the features of claim 11.

It is an advantage of the method of the present invention that it enables disposing spaced masses or nodules of soil to the web in a reliable manner and without the use of special adhesives during preparation of the web.

Also, the resulting web has several advantages, including the ability to conform to irregular ground surfaces. Also, the material may be supplied in convenient roll form and may be cut to the desired dimension. When the deposits on the web include a herbicide, the web may be installed beneath the ground to prevent penetration of roots beneath the web. The web may also be used as a wrap to protect objects such as pipes. Many other advantages will become apparent. upon review of the following specification and claims.

### The Drawings

Figure 1 is a perspective view of the product of the present invention.

Figure 2 is a vertical sectional view of a portion of the product shown in Figure 1.

Figure 3 is a vertical sectional view of apparatus useful in carrying out the present invention.

Figure 4 is a schematic side view of another apparatus for carrying out the invention in a continuous fashion.

### Description of the Preferred Embodiments

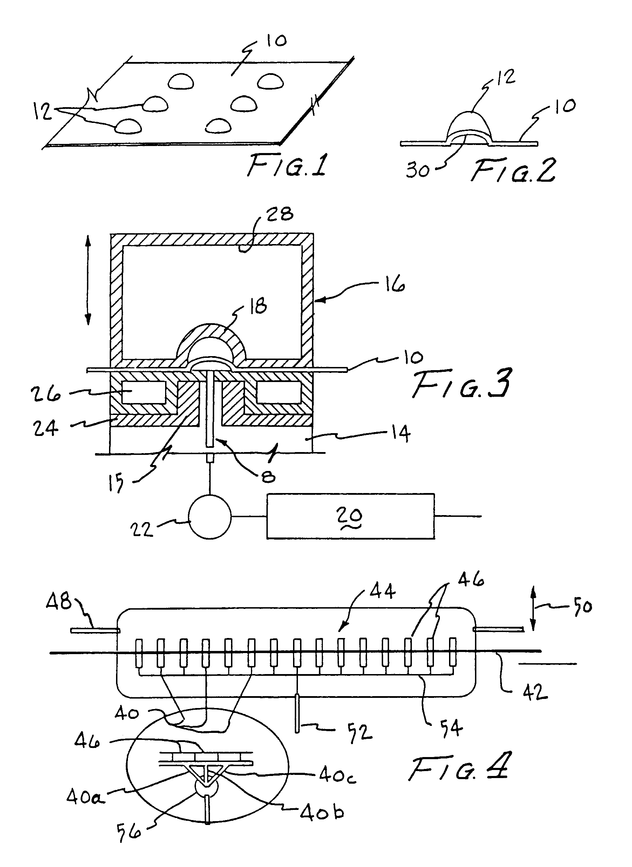

In general, the present invention contemplates the provision of a porous web or sheet 10 having a plurality of spaced nodules 12 of a slow release, soil treatment system bonded thereto, as shown in Figures 1 and 2. The sheet may be applied to the soil surface or beneath the soil surface for a variety of purposes, as will be described more fully herein.

The term "soil treatment agent" as used herein means a compound or mixture of compounds which, when added to the soil, are effective to control, regulate or promote the growth of plant or animal life in the soil. Conventional agents, for example, would include herbicides, fungicides, insecticides, nutrients, plant seeds, moisture absorbers, hormones, enzymes and the like. In the preferred embodiment, the agent is a herbicide, which may be used to prevent or control the growth of roots. A suitable class of herbicides are the dinitroanilines described in U.S. patents no. 3,111,403, no. 3,257,190 and no. 4,101,582.

The porous web 10 is a flat porous flexible sheet of any desired dimensions. The sheet may be woven or non-woven but is preferably composed of materials which do not degrade or rot during contact with the soil over a period of time. A particularly suitable web is a spunbonded non-woven synthetic material, such as a material composed of overlapping filaments of a polymer such as polypropylene. One such material is sold under the trademarks "TYPAR" or "TEKTON."

The nodules or deposits 12 on the web 10 preferably comprise the soil treatment agent which is dispersed in a water insoluble solid binder or matrix in such a manner that the active agent will be continuously released over a relatively long period of time. During application, the binder is in the form of a liquid or liquid mixture which is capable of penetrating through the pores of the web. Upon application, the liquid is solidified in the desired shape as explained more fully herein.

Broadly, suitable binders or carriers for soil treatment agents include thermoplastic or curable materials. In the preferred embodiment, the binder is a thermoplastic polymer such as a polyolefin, polyester, polyvinyl chloride, or the like. In the case of a herbicide such as a dinitroaniline, the preferred carrier is a low density polyethylene. The carrier may also contain fillers or absorbent materials such as carbon black.

In use, the geotextile is applied to the soil to form a layer on or beneath the soil. The web 10 is flexible and conforms to irregularities or changing contours. When the agent is a herbicide, the sheet may be employed beneath power lines, at the edge of paved surfaces, around pipes, and over waste areas. Thereafter, the herbicide is released over a period of time and prevents penetration of roots through the treated web. Depending on the carrier employed for the herbicide, and the size of the nodules 12, effective amounts of herbicide will continue to be released for long periods of time, i.e., up to 100 years and beyond.

The process for making the product will now be described in connection with herbicides. Broadly, the method comprises the steps of injecting or forcing under pressure a quantity of a mixture of a liquid binder and active agent through one side of the porous web, and then allowing the mixture to solidify in the form of a discreet lump or nodule on the other side of the web. During solidification, the porous web in entrapped by the binder such that the resulting nodule is permanently enmeshed and attached to the web. As shown in Figure 1, a multiplicity of lines and rows of spaced nodules may be applied to the web in order to provide overlapping zones of release of the herbicide.

In the preferred embodiment, as shown in Figure 3, the porous web 10 is disposed horizontally, and the carrier and active agent mixture is injected under pressure through the lower surface of the web through a nozzle 14. A mold, generally indicated at 16, has an open cavity 18 and is pressed against the other side of the web 10, with the cavity 18 facing the nozzle 14 and in register therewith. As the liquid mixture is injected through the porous web 10, it fills the cavity. The porous web allows air to escape but chilled surfaces of the mold solidify and retain the liquid. After the liquid has solidified, the mold 16 may be raised as shown by the arrow, and the web 10 may be moved to a new position to receive an additional deposit.

In the case of a herbicide, the herbicide is mixed with a thermoplastic carrier such as polyethylene and heated under pressure until the carrier becomes liquid. This may be accomplished with the use of a heated pump or extruder 20 having the outlet end thereof connected to the nozzle 14 after passing through a meter pump 22. In order to provide support for the underside of the web 10 during injection, an apertured plate 24 which may include chill chambers 26 with a planar surface is provided, with the nozzle 14 extending through the aperture and being insulated at 15. Also, in the case of thermoplastic materials, the mold 16 may have a circulation chamber 28 or other means for cooling, such as by passage of cold water. This allows rapid solidification of liquid mixture and reduces dwell time.

There are several important benefits in the use of a thru-web injection and molding technique. As the hot liquid mixture is injected through the web, as shown in Figure 3, the liquid pressure causes the web 10 to deform or bulge at 30 toward the mold cavity, as shown in Figure 2. As the mixture solidifies, the web is securely entrapped by the solidified mixture, and the resulting nodule 12 is permanently attached to the web, with the web enmeshed in the solid nodule. If the hot liquid was merely deposited on the surface of the web, the mixture would solidify but would not adhere to the web.

A second benefit is that the use of an opposed mold cavity allows the final shape of the nodule to be precisely controlled. The size and shape of the nodule is important in determining the rate of discharge of the herbicide from the polymer mass. As shown, the nodule is preferably dome shaped.

Finally, the use of injection into a cooled mold assures that the dispersion between the polymer and herbicide will remain uniform. The melting point of herbicides is usually much lower than the melting point of the polymer. Without the use of pressure and rapid cooling the herbicide would tend to escape from the heated mixture or migrate toward the outer surface and cause voids. The present method allows for system pressure to be maintained until the nodule has solidified.

Figure 4 schematically illustrates an apparatus for commercial production of the product described herein. Rows of spaced nozzles, 40 in groups of three, 40a, 40b and 40c, are disposed across the width of the web 42 to be treated. A chilled form casting 44 having a plurality of cavities such as 46 and chilled with water via supply line 48 is provided in registration with the nozzles 40. The casting 44 reciprocates vertically as indicated by the arrow at 50. In the up position the web 42 is moved in the direction indicated by the arrow and moves the length of the casting to expose a new area to be injected. In the down position, the casting 44 sandwiches the web 42 and seals in registry with the nozzles 40. The molten composite material is supplied via a line 52 and is distributed via a manifold 54. A reciprocating rotary valve 56 controls the composite flow time to the nozzles 40, injecting the composite through the web 42 and filling the sealed cavities 46 forming and cooling the deposit. The web may then be rewound and transported in aconvenient fashion.

In further illustration of the invention, the following example is given.

### EXAMPLE

A geotextile was prepared to provide control of root growth. The textile was a spunbonded, non-woven web of polypropylene. Herbicide slow release systems were prepared which contained by weight from about 25 to about 28 percent trifluralin, from about 12 to about 15 percent carbon black, and the remainder as low density polypropylene. One specific useful formulation is 26.6 percent trifluralin, 13.3 percent carbon black, and 60.1 percent low density polypropylene.

The foregoing mixture was heated to a temperature sufficient to melt the polypropylene, or about 160°C. The material was mixed and supplied under pressure of about 1000 psi (68974 Ncm⁻²) to a nozzle, and a quantity was injected through the porous web filling the facing chamber of a chilled mold cavity.

In order to provide effective distribution, the deposits are spaced regularly or uniformly over the surface of the web. In order to achieve the desired release of herbicide over long periods of time, the spacing between adjacent nodules should be no greater than 1.5 inches (3,81 cm). Also, the size of the nodule should be equal to or greater than 3/8 inch (0,95 cm) base diameter dome.

## Claims

1. A method of preparing a porous web having a soil treatment agent applied thereto comprising the steps of preparing a liquid mixture of the soil treatment agent and a binder, injecting the liquid mixture through the porous web, and solidifying the mixture such that the porous web is entrapped by the solid mixture to bond the solid mixture to the web.

2. The method of Claim 1 wherein the binder is a solid at room temperature, and wherein the agent and binder mixture are heated prior to injection.

3. The method of Claim 2 wherein the agent and binder mixture are cooled upon passage through the web.

4. The method of Claim 1 wherein the liquid mixture is injected through one side of the porous web into a mold cavity disposed on the other side of the web to provide a solid nodule of the mixture, bonded to the web.

5. The method of Claim 1 wherein the binder comprises a thermoplastic polymer and the soil treatment agent comprises a herbicide.

6. The method of Claim 5 wherein the binder comprises polyethylene and the soil treatment agent comprises a herbicide.

7. The method of Claim 1 wherein the mixture comprises polypropylene, carbon black and a herbicide.

8. The method of Claim 4 wherein the liquid mixture is injected through the web at a plurality of spaced locations to provide a plurality of spaced nodules bonded to said web.

9. The method of Claim 1 wherein said web is a non-woven, spunbonded material.

10. The method of Claim 9 wherein said web is composed of polypropylene.

11. A geotextile having a soil treatment agent aplied thereto comprising a porous sheet of polymeric material, and a plurality of spaced solid nodules comprising a binder and a soil treatment agent bonded through said porous sheet.

12. The geotextile of Claim 11 wherein said porous sheet comprises a non-woven, spunbonded fabric.

13. The geotextile of Claim 11 wherein said binder is a thermoplastic solid.

14. The geotextile of Claim 11 wherein the soil treatment agent is selected from the group consisting of herbicides, fungicides, insecticides, nutrients, plant seeds, moisture absorbers, hormones, enzymes, and mixtures thereof.

15. The geotextile of Claim 11 wherein said nodules comprise a mixture of herbicide, carbon black and a polymer binder.

## Patentansprüche

1. Verfahren zur Herstellung eines porösen Flächengebildes, das mit einem Bodenbehandlungsmittel versehen ist, wobei das Verfahren folgende Schritte umfaßt: es wird ein flüssiges Gemisch aus dem Bodenbehandlungsmittel und einem Binder hergestellt, das flüssige Gemisch wird durch das poröse Flächengebilde hindurchgespritzt und das Gemisch wird derart verfestigt, daß das poröse Flächengebilde von dem festen Gemisch eingehüllt wird und das feste Gemisch an das Flächengebilde gebunden wird.

2. Verfahren nach Anspruch 1, bei dem der Binder bei Raumtemperatur ein Feststoff ist und bei dem das Gemisch aus Behandlungsmittel und Binder vor dem Einspritzen erhitzt wird.

3. Verfahren nach Anspruch 2, bei dem das Gemisch aus Behandlungsmittel und Binder unmittelbar nach dem Durchtritt durch das Flächengebilde gekühlt wird.

4. Verfahren nach Anspruch 1, bei dem das flüssige Gemisch durch eine Seite des porösen Flächengebildes hindurch in den Hohlraum einer Form gespritzt wird, die auf der anderen Seite des Flächengebildes zur Bildung eines festen Knollens aus dem Gemisch, der an das Flächengebilde gebunden ist, angeordnet ist.

5. Verfahren nach Anspruch 1, bei dem der Binder ein thermoplastisches Polymer und das Bodenbehandlungsmittel ein Herbizid umfaßt.

6. Verfahren nach Anspruch 5, bei dem der Binder Polyethylen und das Bodenbehandlungsmittel ein Herbizid umfaßt.

7. Verfahren nach Anspruch 1, bei dem das Gemisch Polypropylen, Ruß und ein Herbizid umfaßt.

8. Verfahren nach Anspruch 4, bei dem das flüssige Gemisch an einer Vielzahl von im Abstand voneinander befindlichen Stellen durch das Flächengebilde hindurchgespritzt wird, und eine Vielzahl von im Abstand voneinander befindlichen, an das Flächengebilde gebundenen Knollen gebildet werden.

9. Verfahren nach Anspruch 1, bei dem das Flächengebilde ein nicht gewebtes Spinnvlies-Material ist.

10. Verfahren nach Anspruch 9, bei dem das Flächengebilde aus Polypropylen besteht.

11. Mit einem Bodenbehandlungsmittel versehenes Geotextil aus einer porösen Bahn aus polymerem Material und mit einer Vielzahl von im Abstand voneinander befindlichen festen Knollen aus einem Binder und einem Bodenbehandlungsmittel, welche an und durch die poröse Bahn gebunden sind.

12. Geotextil nach Anspruch 11, bei dem die poröse Bahn ein nicht gewebtes Spinnfaservlies ist.

13. Geotextil nach Anspruch 11, bei dem der Binder ein thermoplastischer Feststoff ist.

14. Geotextil nach Anspruch 11, bei dem das Bodenbehandlungsmittel aus der aus Herbiziden, Fungiziden, Insektiziden, Nährstoffen, Pflanzensamen, feuchtigkeitabsorbierenden Mitteln, Hormonen, Enzymen und deren Gemischen bestehenden Gruppe ausgewählt ist.

15. Geotextil nach Anspruch 11, bei dem die Knollen ein Gemisch aus Herbizid, Ruß und einem polymeren Binder umfassen.

## Revendications

1. Procédé de préparation d'un voile poreux ayant un agent pour le traitement du sol appliqué dessus, comprenant les étapes consistant à préparer un mélange liquide de l'agent pour le traitement du sol et d'un liant, injecter le mélange liquide à travers le voile poreux, et solidifier le mélange de façon à ce que le voile poreux soit piégé par le mélange solide pour lier le mélange solide au voile.

2. Procédé selon la revendication 1, dans lequel le liant est solide à température ambiante et dans lequel le mélange de l'agent et du liant est chauffé avant injection.

3. Procédé selon la revendication 2, dans lequel le mélange de l'agent et du liant est refroidis par passage à travers le voile.

4. Procédé selon la revendication 1, dans lequel le mélange liquide est injecté à travers une face du voile poreux dans une cavité de moule disposée sur l'autre face du voile pour fournir un nodule solide du mélange, lié au voile.

5. Procédé selon la revendication 1, dans lequel le liant comprend un polymère thermoplastique et l'agent pour le traitement du sol comprend un herbicide.

6. Procédé selon la revendication 5, dans lequel le liant comprend du polyéthylène et l'agent pour le traitement du sol comprend un herbicide.

7. Procédé selon la revendication 1, dans lequel le mélange comprend du polypropylène, du noir de carbone et un herbicide.

8. Procédé selon la revendication 4, dans lequel le mélange liquide est injecté à travers le voile sur une pluralité d'emplacements espacés pour fournir une pluralité de nodules espacés liés au dit voile.

9. Procédé selon la revendication 1, dans lequel ledit voile est un matériau non tissé, selon la technique spellbound.

10. Procédé selon la revendication 9, dans lequel ledit voile est composé de polypropylène.

11. Géotextile ayant un agent de traitement du sol appliqué dessus, comprenant une feuille poreuse de matériau polymérique, et une pluralité de nodules solides espacés comprenant un liant et un agent de traitement pour le sol liés à travers ladite feuille poreuse.

12. Géotextile selon la revendication 11, dans lequel ladite feuille poreuse comprend un tissu non-tissé, selon la technique spunbound.

13. Géotextile selon la revendication 11, dans lequel ledit liant est un solide thermoplastique.

14. Géotextile selon la revendication 11, dans lequel l'agent pour le traitement du sol est choisi dans le groupe constitué par les herbicides, les fongicides, les insecticides, les substances nutritives, les graines de plantes, les absorbeurs d'humidité, les hormones, les enzymes, et des mélanges de ceux-ci.

15. Géotextile selon la revendication 11, dans lequel lesdits nodules comprennent un mélange d'un herbicide, de noir de carbone et d'un liant polymérique.
